# EUROPÄISCHE PATENTANMELDUNG

(11) **EP 2 600 020 A2**
(43) Veröffentlichungstag der Anmeldung: **05.06.2013**
(21) Anmeldenummer: 12194831.9
(22) Anmeldetag: 29.11.2012
(51) Int. Cl.: F16D 23/02

(54) **Kupplungskörper und Verfahren zu dessen Herstellung**

(30) Priorität: 30.11.2011 DE 102011120343
(71) Anmelder: GETRAG Getriebe- und Zahnradfabrik Hermann Hagenmeyer GmbH & Cie KG, 74199 Untergruppenbach (DE)
(72) Erfinder: Sojka, Jürgen, 74523 Schwäbisch Hall (DE)
(74) Vertreter: Witte, Weller & Partner

(57) **Zusammenfassung**

Ein Verfahren zum Herstellen eines Kupplungskörpers (48), insbesondere für eine Synchronisierungseinrichtung (56) eines Kraftfahrzeuggetriebes (50), wobei der Kupplungskörper einen Grundkörper (17) aufweist, an dem eine Kupplungskörperverzahnung (46), eine Verbindungsfläche (30) zur Verbindung mit einem Drehglied (54) sowie eine Kegelfläche (32) zur Reibpaarung mit einem Synchronring (62) ausgebildet sind, wobei das Verfahren die Schritte aufweist: Bereitstellen eines Kupplungskörperrohlings (12); Formen einer ersten Mehrzahl von ersten Umfangssegmenten (18) an einem Umfangsabschnitt des Kupplungskörperrohlings, wobei die ersten Umfangssegmente die Verbindungsfläche definieren; und Formen einer zweiten Mehrzahl von zweiten Umfangssegmenten (20) an einem Umfangsabschnitt des Kupplungskörperrohlings, wobei die zweiten Umfangssegmente die Kegelfläche definieren; wobei die ersten und die zweiten Umfangssegmente über den Umfang des Kupplungskörpers verteilt angeordnet sind.

## Beschreibung

Die vorliegende Erfindung betrifft ein Verfahren zum Herstellen eines Kupplungskörpers, insbesondere für eine Synchronisierungseinrichtung eines Kraftfahrzeuggetriebes, wobei der Kupplungskörper einen Grundkörper aufweist, an dem eine Kupplungskörperverzahnung, eine Verbindungsfläche zur Verbindung mit einem Drehglied wie einem Losrad sowie eine Kegelfläche zur Reibpaarung mit einem Synchronring ausgebildet sind.

Ferner betrifft die vorliegende Erfindung einen Kupplungskörper für eine Synchronisierungseinrichtung eines Kraftfahrzeuggetriebes mit einem ringscheibenförmigen Grundkörper, an dessen Außenumfang eine Kupplungskörperverzahnung ausgebildet ist und der eine Verbindungsfläche sowie eine Kegelfläche definiert.

Schließlich betrifft die vorliegende Erfindung eine Synchronisierungseinrichtung, insbesondere für ein Kraftfahrzeuggetriebe, mit einer Führungsmuffe, die fest mit einer Welle verbindbar ist, mit einer Schaltmuffe, die axial verschieblich an der Führungsmuffe gelagert ist, und mit einem Kupplungskörper, der fest mit einem an der Welle drehbar gelagerten Drehglied verbindbar ist.

Kupplungskörper dieser Art sind allgemein bekannt und werden insbesondere in Schaltkupplungen von Kraftfahrzeuggetrieben verwendet, die insbesondere als Vorgelegegetriebe ausgebildet sein können.

Die Kraftfahrzeuggetriebe können dabei handgeschaltete Getriebe sein, sowie automatisierte Getriebe wie automatisierte Schaltgetriebe, Doppelkupplungsgetriebe, etc. Ferner werden derartige Synchronisierungseinrichtungen auch in anderen Abschnitten von Kraftfahrzeugantriebssträngen verwendet, beispielsweise in elektromotorisch angetriebenen Achsen, die mehrere Gangstufen aufweisen, etc.

Bei Synchronisierungseinrichtungen ist es zum einen bekannt, einen Reibkonus mit einer Kegelfläche zum Zweck einer Reibpaarung mit einer entsprechenden Kegelfläche eines Synchronringes direkt an einem Drehglied wie einem Losrad auszubilden. Bei manchen solchen Drehgliedern ist die unmittelbare Ausbildung einer solchen Kegelfläche aus Fertigungs- oder "Package"-Gründen nicht angezeigt. In solchen Fällen wird die Synchronisierungseinrichtung in einer ersten Variante hergestellt, indem zunächst ein Kupplungskörper aus einem Vollkörper, z.B. einem Schmiederohling, bereitgestellt wird. Bei dieser Variante wird die Kegelfläche vor oder nach der Montage an dem Drehglied spanend fertig hergestellt. Gegen diese Kegelfläche läuft dann ein Synchronring mit aufgebrachtem Reibbelag.

Bei dieser Variante ist die Herstellung des Kupplungskörpers aus einem Schmiederohling teuer. Ferner ist es notwendig, einen Synchronring mit aufgebrachtem Reibbelag zu verwenden.

In einer zweiten Variante wird ein Kupplungskörper in Scheibenform an dem Drehglied festgelegt. Anschließend wird ein separat hergestellter Konusring formschlüssig mit dem Kupplungskörper verbunden, indem Nocken des Konusringes in Taschen des Kupplungskörpers gesteckt werden. Der Konusring weist eine Kegelfläche auf, die eine Reibpaarung mit einer Synchronring-Kegelfläche eines Synchronringes bildet. Bei dieser Variante kann ein Reibbelag sowohl am Synchronring als auch am Konusring angebracht sein. Der Nachteil dieser zweiten Variante besteht darin, dass immer ein gesteckter separater Konusring als Träger für den Reibbelag oder als Gegenreibfläche notwendig ist, und zwar zusätzlich zu den Bauelementen Synchronring und Kupplungskörper.

Aus dem Dokument DE 198 53 896 A1 ist eine Synchronisierungseinrichtung für ein Schaltgetriebe bekannt, wobei ein äußerer Synchronring ein einstückiger, dünnwandiger und spanlos geformter Blechring ist, an dessen Stirnseite mit dem größten Durchmesser eine Verzahnung und an dessen Stirnseite mit dem kleinsten Durchmesser ein radial nach außen gerichteter Bord ausgebildet ist.

Ferner ist aus dem Dokument DE 100 18 093 A1 eine Verzahnung für eine Synchronisiereinheit bekannt, die ein durch Umformen aus einem Blech geformtes einteilig ausgebildetes Keilprofil aufweist, wobei es sich bei der Verzahnung um eine Verzahnung einer Schaltmuffe oder eines Synchronkörpers handelt.

Das Dokument DE 10 2006 059 868 A1 offenbart ein weiteres Verfahren zum Herstellen eines Synchronringes, wobei ein Ausgangswerkstück umformtechnisch bearbeitet wird, um einen Ringkörper zu bilden, und wobei der Ringkörper anschließend mittels eines Walzverfahrens nachgewalzt wird, wobei das Nachwalzen eine Walzbearbeitung der inneren Reibfläche und/oder der äußeren Reibfläche beinhaltet.

Ferner offenbart dieses Dokument DE 20 2006 019 959 U1 einen Synchronring, der Ausnehmungen aufweist und einen Käfig bildet, der Reibelemente in den Ausnehmungen führt, wobei die Reibelemente in den Ausnehmungen verschiebbar und/oder verdrehbar angeordnet sind, wie es in ähnlicher Form auch aus dem Dokument DE 10 2008 052 415 A1 bekannt geworden ist.

Vor diesem Hintergrund ist es eine Aufgabe der Erfindung, ein verbessertes Verfahren zum Herstellen eines Kupplungskörpers sowie einen Kupplungskörper und eine Synchronisierungseinrichtung mit einem solchen Kupplungskörper anzugeben, wobei der Kupplungskörper insbesondere kostengünstig hergestellt werden soll.

Diese Aufgabe wird zum einen gelöst durch ein Verfahren zum Herstellen eines Kupplungskörpers, insbesondere für eine Synchronisierungseinrichtung eines Kraftfahrzeuggetriebes, wobei der Kupplungskörper einen Grundkörper aufweist, an dem eine Kupplungskörperverzahnung, eine Verbindungsfläche zur Verbindung mit einem Drehglied sowie eine Kegelfläche zur Reibpaarung mit einem Synchronring ausgebildet sind, und wobei das Verfahren die Schritte aufweist, einen Kupplungskörperrohling bereitzustellen, an einem Umfangsabschnitt des Kupplungskörperrohlings eine erste Mehrzahl von ersten Umfangssegmenten zu formen, die die Verbindungsfläche definieren, an einem Umfangsabschnitt des Kupplungskörperrohlings eine zweite Mehrzahl von zweiten Umfangssegmenten zu formen, die die Kegelfläche definieren, wobei die ersten und die zweiten Umfangssegmente über den Umfang des Kupplungskörpers verteilt angeordnet sind.

Ferner wird die obige Aufgabe gelöst durch einen Kupplungskörper für eine Synchronisierungseinrichtung eines Kraftfahrzeuggetriebes, mit einem ringscheibenförmigen Grundkörper, an dessen Außenumfang eine Kupplungskörperverzahnung ausgebildet ist und von dessen Innenumfang sich eine erste Mehrzahl von ersten Umfangssegmenten, die eine Verbindungsfläche definieren, und eine zweite Mehrzahl von zweiten Umfangssegmenten erstreckt, die eine Kegelfläche definieren, wobei die ersten und die zweiten Umfangssegmente über den Umfang des Kupplungskörpers verteilt angeordnet sind.

Schließlich wird die obige Aufgabe gelöst durch eine Synchronisierungseinrichtung, insbesondere für ein Kraftfahrzeuggetriebe, mit einem Kupplungskörper der erfindungsgemäßen Art.

Mit der Erfindung wird zum einen erreicht, dass ein Kupplungskörper mit einer daran ausgebildeten Kegelfläche bereitgestellt wird, so dass das Bereitstellen eines separaten Konusrings nicht erforderlich ist. Ferner ist es möglich, einen einfachen Kupplungskörperrohling bereitzustellen, der insbesondere nicht geschmiedet sein muss (kein Schmiederohling).

Durch das Formen von ersten Umfangssegmenten, die die Verbindungsfläche definieren, und das vorzugsweise gleichzeitige Formen von zweiten Umfangssegmenten zur Definition der Kegelfläche können diese Segmente funktionsspezifisch realisiert werden, insbesondere hinsichtlich Montagedurchmesser der Verbindungsfläche, hinsichtlich Montagegeometrie und Führungslänge der Verbindungsfläche sowie hinsichtlich Reibdurchmesser, Reibwinkel und/oder Konuslänge der Kegelfläche.

Durch die umfänglich verteilte Anordnung der ersten und der zweiten Umfangssegmente kann zudem eine gute Beölung und Ölabfuhr gewährleistet werden. Insbesondere ist es möglich, den Kupplungskörper und ggf. den Reibbelag ohne Ölnuten zu realisieren.

Ferner kann ein Reibbelag an der Kegelfläche vorgesehen werden, so dass es ggf. möglich ist, den Kupplungskörper mit einem Synchronring zu paaren, der keinen eigenen Reibbelag aufweist. Dabei können unterschiedliche Reibmaterialien verwendet werden, wie z.B. Eisen- und Streusinter, Carbon, Molybdän, Messing, ...

Alternativ ist es natürlich auch möglich, die Kegelfläche ohne Reibbelag auszubilden und einen Reibbelag an dem Synchronring vorzusehen.

Durch die Verteilung der ersten und der zweiten Umfangssegmente über den Umfang des Kupplungskörpers ergibt sich vorzugsweise in der Draufsicht eine wellige Struktur der Umfangssegmente, durch die insbesondere die Beölung und die Ölabfuhr gewährleistet werden kann. Das Formen der ersten und der zweiten Umfangssegmente erfolgt vorzugsweise durch spanloses Umformen, insbesondere durch Biegen. Generell ist es jedoch auch möglich, einen erfindungsgemäßen Kupplungskörper durch Urformen herzustellen, beispielsweise durch Gießen oder Sintern. Beim Urformen erfolgen das Bereitstellen eines Kupplungskörperrohlings und das Formen der Umfangssegmente in einem Schritt.

Da vorzugsweise keine spanende Bearbeitung zur Herstellung des Kupplungskörperrohlings notwendig ist, ergibt sich ein weit geringerer Material- bzw. Schnittabfall.

Sofern die Außen- und/oder Innenkontur der ersten und der zweiten geformten Umfangssegmente in der axialen Draufsicht wellenförmig ist, kann ein Anhaften des Synchronringes bei kaltem Öl verringert werden, wodurch die Kaltschaltbarkeit der Synchronisierungseinrichtung verbessert werden kann.

Die Verbindungsfläche ist vorzugsweise eine zylindrische Verbindungsfläche, die in Umfangsrichtung unterbrochen ist, jedoch vorzugsweise parallel zu einer Drehachse eines Drehgliedes ausgerichtet ist, an dem der Kupplungskörper festzulegen ist.

Die Kegelfläche ist vorzugsweise eine Fläche, die um einen Winkel größer 0° gegenüber einer solchen Drehachse geneigt ist, wobei der hierdurch realisierte Kegelwinkel im Bereich zwischen 1° und 30° liegen kann.

Insgesamt kann erfindungsgemäß ein kostengünstiger Kupplungskörper bereitgestellt werden.

Anstelle zur Herstellung eines Kupplungskörpers kann das erfindungsgemäße Verfahren auch zur Herstellung anderer Ringkörper angewendet werden.

Die Aufgabe wird somit vollkommen gelöst.

Gemäß einer besonders bevorzugten Ausführungsform wird der Kupplungskörperrohling als ein flaches Blechelement bereitgestellt, das insbesondere aus einem Blechstreifen erzeugt werden kann. Demzufolge kann der Kupplungskörperrohling kostengünstig und ohne Schmiedebearbeitung oder spanende Bearbeitung bereitgestellt werden.

Von besonderem Vorzug ist es dabei, wenn der Kupplungskörperrohling durch Stanzen aus einem flachen Blechmaterial wie einem Blechstreifen bereitgestellt wird.

Der Schnittabfall kann dabei vorzugsweise auf einfache Weise wieder eingeschmolzen und wiederverwendet werden.

Insbesondere ist es bevorzugt, wenn der Kupplungskörper als ein Ringelement bereitgestellt wird, insbesondere als eine flache Ringscheibe, deren Außenumfang zur Ausbildung der Kupplungsverzahnung ausgelegt ist und deren Innenumfang zur Ausbildung der ersten und der zweiten Umfangssegmente ausgebildet ist. Theoretisch ist es zwar auch denkbar, die Umfangssegmente im Bereich des Außenumfanges des Ringelementes herzustellen. Für übliche Synchronisierungseinrichtungen ist es jedoch bevorzugt, wenn die ersten und die zweiten Umfangssegmente an einem Innenumfangsabschnitt des Kupplungskörperrohlings geformt werden.

Von besonderem Vorteil ist es, wenn die ersten Umfangssegmente und/oder die zweiten Umfangssegmente durch Biegen in einer Richtung quer zu einer Ebene des Kupplungskörperrohlings geformt werden.

Insbesondere dann, wenn der Kupplungskörperrohling als flache Ringscheibe aus einem flachen Blechmaterial bereitgestellt wird, kann das Umformen der Umfangssegmente durch Biegen in einer Richtung quer zur Ebene des Kupplungskörperrohlings umformtechnisch vergleichsweise einfach realisiert werden. Dabei ist es generell möglich, die Umfangssegmente durch radiale Schnitte im Bereich des Innenumfangs vorzudefinieren. Hierdurch wird der Biegevorgang vereinfacht. In diesem Fall ist es bevorzugt, die einzelnen Umfangssegmente im Bereich der Trennlinien wieder zu verbinden, beispielsweise durch Schweißen, um eine höhere Gesamtstabilität des fertiggestellten Kupplungskörpers zu erreichen.

Alternativ hierzu ist es möglich, das Biegen der ersten und der zweiten Umfangssegmente im Bereich des Innenumfangs des Kupplungskörperrohlings ohne das Bereitstellen derartiger radialer Einstiche vorzusehen, wodurch sich in der axialen Draufsicht eine stetige Wellenform der Umfangssegmente ergibt. Bei der Variante mit radialen Einstichen können die einzelnen Umfangssegmente über scharfe Absätze ineinander übergehen.

Generell ist es möglich, einen Reibbelag auf die in Umfangsrichtung unterbrochene Kegelfläche des Kupplungskörpers aufzubringen, nachdem die Umfangssegmente geformt worden sind.

Besonders bevorzugt ist es jedoch, wenn ein Reibbelag auf eine Fläche des Kupplungskörperrohlings aufgebracht wird, bevor die ersten und/oder die zweiten Umfangssegmente geformt werden.

Hierdurch wird zwar ggf. in den Bereichen zwischen den zweiten Umfangssegmenten ein Reibbelag am fertiggestellten Kupplungskörper vorhanden sein, der nicht zu Reibpaarungszwecken verwendet wird. Allerdings ist es deutlich kostengünstiger, den Reibbelag auf einen flachen Kupplungskörperrohling aufzubringen.

Ferner ist es möglich, die Kupplungskörperverzahnung vor dem Formen der ersten und der zweiten Umfangssegmente an dem Kupplungskörperrohling auszubilden.

Von besonderem Vorzug ist es jedoch, wenn die Kupplungskörperverzahnung nach dem Formen der ersten und/oder der zweiten Umfangssegmente geformt wird. Das Formen der Kupplungskörperverzahnung kann ein spanloses Umformen sein, beispielsweise Prägen. Alternativ ist es jedoch auch möglich, die Kupplungskörperverzahnung durch ein spanendes Verfahren herzustellen.

Ferner ist es insgesamt vorteilhaft, wenn zwischen wenigstens zwei zweiten Umfangssegmenten ein Reibelement eingesetzt wird, das mit diesen zweiten Umfangssegmenten die Kegelfläche vervollständigt.

Die Reibelemente können dabei fest mit dem Kupplungskörperrohling verbunden sein. Alternativ können die Reibelemente auch beweglich an dem Kupplungskörper gelagert werden, wie es beispielsweise in den Dokumenten DE 20 2006 019 959 U1 oder DE 10 2008 052 415 A1 offenbart ist. Hierbei kann es ggf. notwendig sein, im Bereich der ersten und/oder im Bereich der zweiten Umfangssegmente Ausnehmungen zur Aufnahme bzw. zur beweglichen Lagerung derartiger Reibelemente vorzusehen. Derartige Ausnehmungen können ggf. bei dem Biegeprozess zum Herstellen der Umfangssegmente mit eingeformt werden.

Vorzugsweise wird die Kegelfläche nach dem Umformen und ggf. nach dem Aufbringen eines Reibbelages kalibriert. Ferner kann eine derartige Kalibrierung ggf. auch im Bereich der Verbindungsfläche erfolgen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein streifenförmiges Blechmaterial mit daraus geformten Kupplungskörperrohlingen;
- Fig. 2: eine Schnittansicht entlang der Linie II-II der Fig. 1;
- Fig. 3: eine Draufsicht auf einen Kupplungskörperrohling nach dem Aufbringen eines Reibbelages im Bereich eines Innenumfangabschnittes;
- Fig. 4: eine schematische Darstellung einer Schnittansicht entlang einer Linie IV-IV der Fig. 3, jedoch nach dem Formen der ersten und der zweiten Umfangsabschnitte;
- Fig. 5: eine axiale Draufsicht auf einen Kupplungskörper mit daran ausgebildeter Kupplungskörperverzahnung;
- Fig. 5a: eine schematische Darstellung eines Kraftfahrzeuggetriebes mit einer erfindungsgemäßen Synchronisierungseinrichtung;
- Fig. 6: eine der Fig. 3 entsprechende perspektivische Darstellung einer weiteren Ausführungsform eines Kupplungskörperrohlinges;
- Fig. 7: eine perspektivische Teilansicht des Kupplungskörperrohlinges der Fig. 6 während eines Biegevorganges;
- Fig. 8: eine der Fig. 7 entsprechende Darstellung des Kupplungskörpers nach dem Umformvorgang zum Herstellen der Umfangssegmente und nach dem Ausbilden einer Kupplungskörperverzahnung mit einem optional in Zwischenräume einzusetzenden Reibelement;
- Fig. 9: eine perspektivische Ansicht des Kupplungskörpers der Fig. 8 in Reibpaarung mit einem Synchronring;
- Fig. 10: eine axiale Teilansicht einer weiteren Ausführungsform eines erfindungsgemäßen Kupplungskörpers; und
- Fig. 11: eine schematische Schnittansicht entlang der Linie XI-XI der Fig. 10.

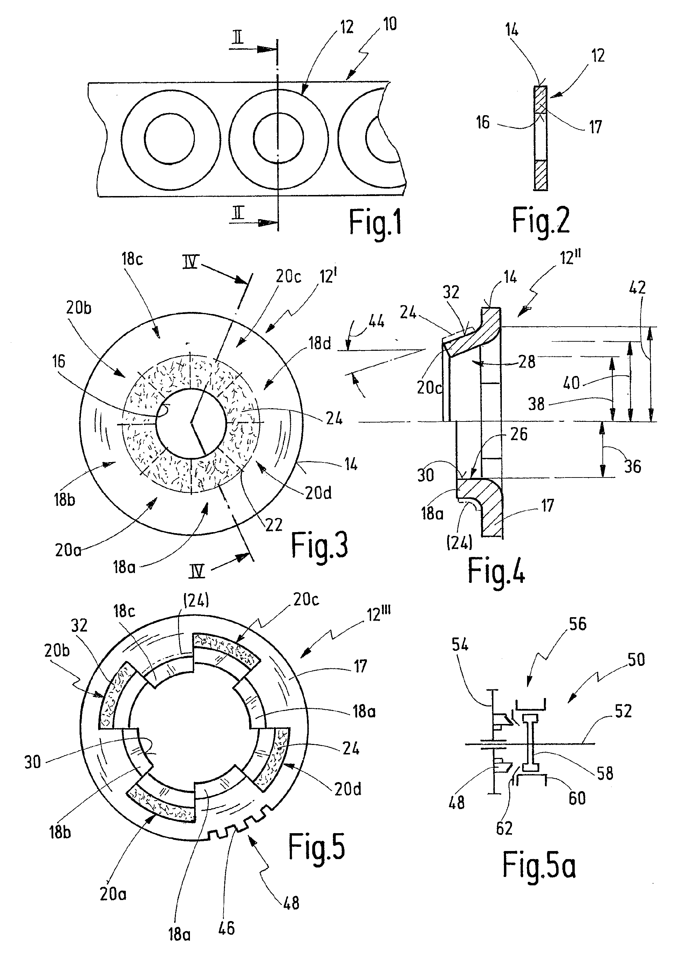

In den Fig. 1 bis 5 ist in schematischer Form die Abfolge eines Verfahrens zum Herstellen einer Ausführungsform eines erfindungsgemäßen Kupplungskörpers dargestellt. Dabei zeigt Fig. 1 in schematischer Draufsicht einen Blechstreifen 10, aus dem flache ringförmige Kupplungskörperrohlinge 12 ausgeschnitten, insbesondere ausgestanzt werden.

Fig. 2 zeigt eine schematische Längsschnittansicht durch einen derartigen Kupplungskörperrohling, der einen ringscheibenförmigen Grundkörper 17 mit einem Außenumfang 14 und einem Innenumfang 16 aufweist.

In Fig. 3 ist eine schematische Draufsicht eines Kupplungskörperrohlings 12' gezeigt, an dessen Innenumfangsbereich eine Mehrzahl von Umfangssegmenten auszubilden ist. In Fig. 3 sind dabei in schematischer Form Trennlinien 22 gezeigt, die rein virtuelle Trennlinien sein können, bei denen es sich jedoch auch um radiale Einschnitte ausgehend vom Innenumfang 16 handeln kann.

Im vorliegenden Fall ist der Umfang des Kupplungskörperrohlings 12' in vier erste Umfangssegmente 18a, 18b, 18c, 18d und in vier zweite Umfangssegmente 20a, 20b, 20c, 20d unterteilt, die über den Umfang des Kupplungskörpers verteilt, insbesondere abwechselnd angeordnet sind. Die Anzahl der ersten und der zweiten Umfangssegmente ist vorzugsweise identisch, kann jedoch auch unterschiedlich sein. Ferner kann die Anzahl der ersten und/oder der zweiten Umfangssegmente jeweils im Bereich von 4 bis 100 liegen, insbesondere im Bereich von 10 bis 30.

In Fig. 3 ist ferner zu erkennen, dass im Bereich der noch umzuformenden Umfangssegmente 18, 20 ein Reibbelag 24 auf einen an den Innenumfang 16 angrenzenden Bereich des diesem Zustand noch flachen Kupplungskörperrohlings 12' aufgebracht worden ist, was kostengünstig realisierbar ist.

Fig. 4 zeigt eine Schnittansicht entlang einer Linie IV-IV der Fig. 3, jedoch nach dem Umformen der Umfangssegmente 18, 20, von denen in Fig. 4 jeweils nur eines dargestellt ist.

Man erkennt, dass die ersten Umfangssegmente (hier das Umfangssegment 18a) im Wesentlichen rechtwinklig zu einer Ebene des Kupplungskörperrohlings 12' umgeformt worden sind, insbesondere umgebogen, wie es bei 26 schematisch angedeutet ist. Ferner ist zu erkennen, dass die zweiten Umfangssegmente (von denen in Fig. 4 nur das Umfangssegment 20c gezeigt ist) ebenfalls durch einen Biegevorgang 28 gegenüber der Grundebene des Kupplungskörperrohlings 12' umgeformt, insbesondere abgebogen worden sind, wobei das Biegen derart erfolgt, dass die zweiten Umfangssegmente 20 nicht rechtwinklig gegenüber der Grundebene des Kupplungskörperrohlings 12' vorstehen, sondern schräg hierzu.

Durch das im Wesentlichen rechtwinklige Abbiegen der ersten Umfangssegmente 18 wird am Innenumfang der ersten Umfangssegmente 18 eine Verbindungsfläche 30 definiert, die im Wesentlichen zylindrisch ausgebildet ist, und zwar konzentrisch zu einer in Fig. 4 schematisch angedeuteten Drehachse. Die Verbindungsfläche 30 kann eine zylindrische Fläche sein, die in Umfangsrichtung unterbrochen ist. Es ist jedoch auch möglich, bei dem Umformvorgang die Verbindungsfläche 30 mit einem Axialverzahnungsprofil bzw. Steckverzahnungsprofil auszubilden. Demzufolge kann der noch fertig zu stellende Kupplungskörper später auf eine Nabe eines Drehgliedes, wie eines Losrades, aufgeschoben und anschließend damit verbunden werden, wie beispielsweise durch Schweißen. Alternativ ist es möglich, einen noch fertig zu stellenden Kupplungskörper auf eine Außenverzahnung einer derartigen Nabe eines Drehgliedes aufzustecken, um eine in Umfangsrichtung formschlüssige Verbindung zu erzielen.

Die zweiten Umfangssegmente 20 sind derart umgebogen, dass am Außenumfang der zweiten Umfangssegmente 20 eine Kegelfläche 32 definiert wird, die schräg zu der Drehachse ausgerichtet ist.

Die Materialstärke der Umfangssegmente 18, 20 entspricht im Wesentlichen der Materialstärke des Kupplungskörperrohlings 12 der Fig. 2, kann jedoch aufgrund des Umform-Vorganges auch kleiner (oder dicker) sein als die Materialstärke des Kupplungskörperrohlings 12 der Fig. 2.

Wie oben erläutert, können die Umfangssegmente 18, 20 vorab durch radiale Einschnitte voneinander getrennt worden sein, wodurch der Biegevorgang der Umfangssegmente erleichtert wird und die Umfangssegmente absatzartig ineinander übergehen. Anschließend können die Umfangssegmente, die sich in radialer Richtung zumindest noch teilweise überlappen, wieder miteinander verbunden werden, beispielsweise durch Schweißen, um eine höhere Gesamtstabilität zu erreichen.

Alternativ ist es jedoch auch möglich, die Umfangssegmente 18, 20 durch einen einheitlichen Biegevorgang so umzuformen, dass die Umfangssegmente in der axialen Draufsicht absatzlos, insbesondere stetig ineinander übergehen.

In Fig. 4 ist ein Radius der Verbindungsfläche 30 bei 36 dargestellt. Bei 38 ist ein Innenradius der zweiten Umfangssegmente 20 dargestellt, deren Außenradius am freien Ende bei 40 dargestellt ist. Der Radius im Bereich des Übergangs der zweiten Umfangssegmente 20 in den Grundkörper 17 ist bei 42 dargestellt.

Ferner ist in Fig. 4 ein Kegelwinkel 44 gezeigt, der größer ist als 0°. Der Kegelwinkel entspricht dem Winkel, um den die Kegelfläche 32 gegenüber der Drehachse geneigt ist.

Fig. 5 zeigt eine Draufsicht auf einen noch weiter bearbeiteten Kupplungskörperrohling 12"', bei dem die Umfangssegmente 18, 20 mit Absätzen ineinander übergehen, also nicht stetig ineinander übergehen, wie oben erläutert. An einem derartigen Kupplungskörperrohling 12'" kann anschließend außenumfänglich eine Kupplungskörperverzahnung 46 ausgebildet werden, entweder durch ein umformendes Verfahren wie Prägen oder durch ein spanendes Verfahren. Der so fertiggestellte Kupplungskörper ist in Fig. 5 mit 48 bezeichnet.

Fig. 5a zeigt in schematischer Form einen Teil eines Kraftfahrzeuggetriebes 50, das eine Welle 52 aufweist, an der ein Drehglied 54 wie ein Losrad drehbar gelagert ist. Die Welle 52 und das Drehglied 54 sind mittels einer Synchronisierungseinrichtung 56 miteinander verbindbar. Die Synchronisierungseinrichtung 56 beinhaltet eine Führungsmuffe 58, die fest mit der Welle 52 verbunden ist, sowie eine Schaltmuffe 60, die axial verschiebbar an der Führungsmuffe 58 gelagert ist, typischerweise über sich in Längsrichtung erstreckende Verzahnungen. Ferner weist die Synchronisierungseinrichtung 56 einen Kupplungskörper 48 auf, der fest mit dem Drehglied 54 verbunden ist, sowie einen Synchronring 62, der zwischen der Schaltmuffe 60 und dem Kupplungskörper 48 angeordnet ist, wie es im Stand der Technik allgemein bekannt ist.

Bei dem Kupplungskörper 48 kann es sich insbesondere um den in Fig. 5 dargestellten Kupplungskörper handeln.

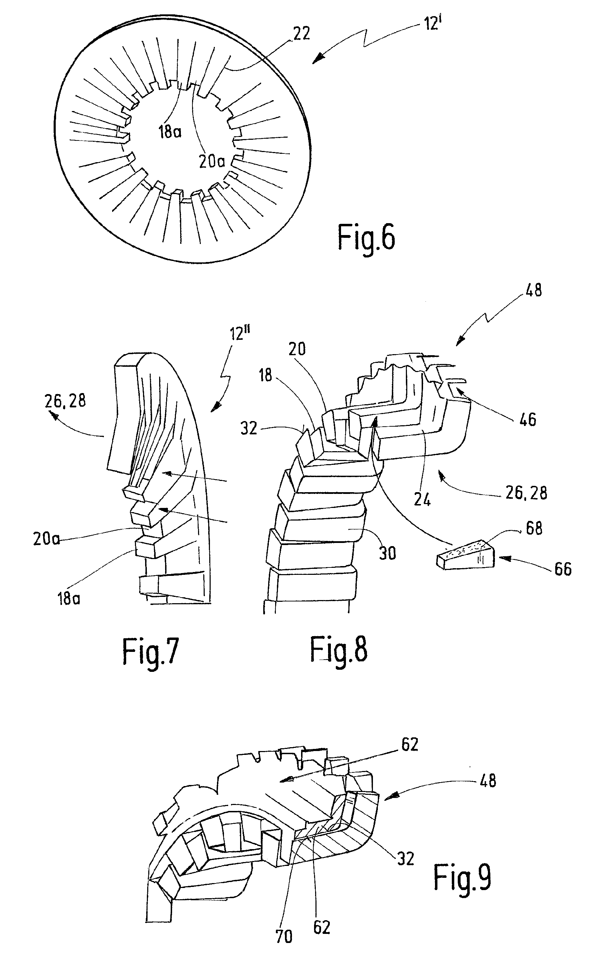

In den Fig. 6 bis 9 ist eine weitere Ausführungsform eines Verfahrens zum Herstellen eines Kupplungskörpers dargestellt, das hinsichtlich Ablauf sowie hinsichtlich Aufbau und Funktionsweise des hergestellten Kupplungskörpers der Ausführungsform der Fig. 1 bis 5 entspricht. Gleiche Elemente sind daher durch gleiche Bezugszeichen versehen. Im Folgenden werden im Wesentlichen die Unterschiede erläutert.

Gemäß Fig. 6 wird zunächst aus einem Blechmaterial ein Kupplungskörperrohling 12' ausgeschnitten (gestanzt), wobei die ersten Umfangssegmente 18 in radialer Richtung weiter nach innen ragen als die zweiten Umfangssegmente 20.

Fig. 7 zeigt den Kupplungskörperrohling 12' während des Biegevorganges 26, 28. Fig. 8 zeigt den fertiggestellten Kupplungskörper nach der Beendigung des Biegevorganges 26, 28 und nach dem Ausbilden der Kupplungskörperverzahnung 46. Durch die unterschiedliche radiale Länge der Umfangssegmente in dem Kupplungskörperrohling 12' der Fig. 6 wird nach dem Umbiegen erreicht, dass die ungeformten Umfangssegmente 18, 20 in axialer Richtung etwa die gleiche Länge besitzen. Bei der Ausführungsform der Fig. 4 sind die ersten Umfangssegmente 18 hingegen axial kürzer als die zweiten Umfangssegmente 20.

In Fig. 8 ist ferner dargestellt, dass in die Zwischenräume zwischen zwei benachbarten zweiten Umfangssegmenten 20 ein Reibelement 66 eingesetzt werden kann, das eine Reibfläche mit oder ohne Reibbelag 68 aufweist, die die Kegelfläche 32 in Umfangsrichtung vervollständigt. Das Reibelement 66 kann dabei fest mit dem Kupplungskörper 48 verbunden werden oder in nicht näher gezeigte Ausnehmungen eingesetzt werden, in denen das Reibelement 66 beweglich gelagert ist.

Fig. 9 zeigt den Kupplungskörper 48 der Fig. 8 in Verbindung mit einem schematisch angedeuteten Synchronring 62, an dessen Innenumfang eine Synchronring-Kegelfläche 70 ausgebildet ist, die der Kegelfläche 32 des Kupplungskörpers 48 entspricht und mit dieser eine Reibpaarung bildet.

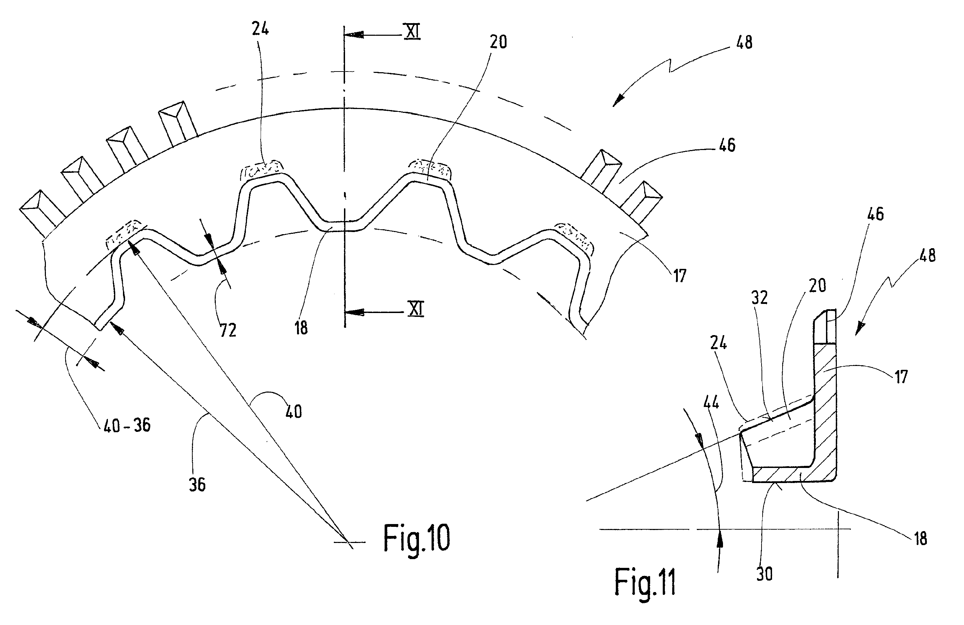

In den Fig. 10 und 11 ist eine weitere Ausführungsform eines Kupplungskörpers 48 dargestellt, der hinsichtlich Aufbau und Funktionsweise generell den oben beschriebenen Ausführungsformen entspricht. Gleiche Elemente sind daher durch gleiche Bezugszeichen gekennzeichnet. Ferner ist der Kupplungskörper im Wesentlichen nach dem gleichen Verfahren hergestellt, wie es oben unter Bezugnahme auf die Fig. 1 bis 9 beschrieben worden ist. Im Folgenden werden im Wesentlichen die Unterschiede erläutert.

Man erkennt, dass die ersten und die zweiten Umfangssegmente 18, 20 so umgebogen worden sind, dass die Umfangssegmente 18, 20 nicht über scharfe Absätze ineinander übergehen, sondern stetig ineinander übergehen, wodurch sich eine kronkorkenartige Wellenform ergibt. Die radiale Dicke 72 der Umfangssegmente 18, 20 ist im Wesentlichen einheitlich und ist besonders größer als die axiale Dicke des Grundkörpers 17 (siehe Fig. 11).

Es versteht sich, dass die konstruktiven Merkmale des Radius 36 und die axiale Länge der Verbindungsfläche 30 (Führungslänge) im Wesentlichen frei gewählt werden können, was in gleicher Weise für die geometrischen Eigenschaften der Kegelfläche gilt, insbesondere Reibdurchmesser, Kegelwinkel und axiale Länge der Kegelfläche.

Durch die Unterbrechung der Kegelfläche in Umfangsrichtung mittels der ersten Umfangssegmente ist eine gute Beölung und Ölabfuhr gewährleistet, so dass Ölnuten insbesondere im Bereich des Reibbelages nicht notwendig sind. Ferner kann das Kaltschaltverhalten hierdurch verbessert sein.

Die benachbarten Segmente 18, 20 sind zwar hinsichtlich ihrer geometrischen Eigenschaften an die jeweiligen Aufgaben angepasst, sind jedoch vorzugsweise miteinander in Umfangsrichtung verbunden, um eine bessere Gesamtstabilität des Kupplungskörpers 48 zu realisieren.

Es versteht sich ferner, dass die Kegelfläche 32 und/oder die Verbindungsfläche 30 nach dem Umformvorgang und/oder nach dem Aufbringen eines Reibbelages 24 noch kalibriert werden können, vorzugsweise vor dem Herstellen der Kupplungskörperverzahnung 46.

## Patentansprüche

1. Verfahren zum Herstellen eines Kupplungskörpers (48), insbesondere für eine Synchronisierungseinrichtung (56) eines Kraftfahrzeuggetriebes (50), wobei der Kupplungskörper (48) einen Grundkörper (17) aufweist, an dem eine Kupplungskörperverzahnung (46), eine Verbindungsfläche (30) zur Verbindung mit einem Drehglied (54) sowie eine Kegelfläche (32) zur Reibpaarung mit einem Synchronring (62) ausgebildet sind, wobei das Verfahren die Schritte aufweist:
- Bereitstellen eines Kupplungskörperrohlings (12);
- Formen einer ersten Mehrzahl von ersten Umfangssegmenten (18) an einem Umfangsabschnitt des Kupplungskörperrohlings (12), wobei die ersten Umfangssegmente (18) die Verbindungsfläche (30) definieren;
- Formen einer zweiten Mehrzahl von zweiten Umfangssegmenten (20) an einem Umfangsabschnitt des Kupplungskörperrohlings (12), wobei die zweiten Umfangssegmente (20) die Kegelfläche (32) definieren;
wobei die ersten und die zweiten Umfangssegmente (18, 20) über den Umfang des Kupplungskörpers (48) verteilt angeordnet sind.

2. Verfahren nach Anspruch 2, wobei der Kupplungskörperrohling (12) als ein flaches Blechelement bereitgestellt wird.

3. Verfahren nach Anspruch 1 oder 2, wobei der Kupplungskörperrohling (12) durch Stanzen aus einem flachen Blechmaterial (10) bereitgestellt wird.

4. Verfahren nach einem der Ansprüche 1 - 3, wobei der Kupplungskörperrohling (12) als ein Ringelement bereitgestellt wird.

5. Verfahren nach Anspruch 4, wobei die ersten und die zweiten Umfangssegmente (18, 20) an einem Innenumfangsabschnitt (16) des Kupplungskörperrohlings (12) geformt werden.

6. Verfahren nach einem der Ansprüche 1 - 5, wobei die ersten Umfangssegmente (18) und/oder die zweiten Umfangssegmente (20) durch Biegen in einer Richtung quer zu einer Ebene des Kupplungskörperrohlings (12) geformt werden.

7. Verfahren nach einem der Ansprüche 1 - 6, wobei vor dem Formen der ersten und/oder der zweiten Umfangssegmente (18, 20) ein Reibbelag (24) auf eine Fläche des Kupplungskörperrohlings (12) aufgebracht wird.

8. Verfahren nach einem der Ansprüche 1 - 7, wobei die Kupplungskörperverzahnung (46) nach dem Formen der ersten und/oder der zweiten Umfangssegmente (18, 20) geformt wird.

9. Verfahren nach einem der Ansprüche 1 - 8, wobei zwischen wenigstens zwei zweiten Umfangssegmenten (20) ein Reibelement (66) eingesetzt wird, das mit diesen zweiten Umfangssegmenten (20) die Kegelfläche (32) vervollständigt.

10. Kupplungskörper (49) für eine Synchronisierungseinrichtung (56) eines Kraftfahrzeuggetriebes (50), mit einem ringscheibenförmigen Grundkörper (17), an dessen Außenumfang eine Kupplungskörperverzahnung (46) ausgebildet ist und von dessen Innenumfang sich eine erste Mehrzahl von ersten Umfangssegmenten (18), die eine Verbindungsfläche (30) definieren, und eine zweite Mehrzahl von zweiten Umfangssegmenten (20) erstreckt, die eine Kegelfläche (32) definieren, wobei die ersten und die zweiten Umfangssegmente (18, 20) über den Umfang des Kupplungskörpers (48) verteilt angeordnet sind.

11. Synchronisierungseinrichtung (56), insbesondere für ein Kraftfahrzeuggetriebe (50), mit einer Führungsmuffe (58), die fest mit einer Welle (52) verbindbar ist, mit einer Schaltmuffe (60), die axial verschieblich an der Führungsmuffe (58) gelagert ist, und mit einem Kupplungskörper (48), der fest mit einem an der Welle (52) drehbar gelagerten Drehglied (54) verbindbar ist, wobei der Kupplungskörper ein Kupplungskörper (48) nach Anspruch 10 ist.

12. Synchronisierungseinrichtung nach Anspruch 11, ferner mit einem Synchronring (62) der eine Synchronring-Kegelfläche (70) aufweist, die der Kegelfläche (32) des Kupplungskörpers (48) entspricht.
